Europäisches Patentamt

European Patent Office

Office européen des brevets

(19)

(11) Numéro de publication : **0 332 495 B1**

# (12) FASCICULE DE BREVET EUROPEEN

(45) Date de publication du fascicule du brevet :
05.08.92 Bulletin 92/32

(51) Int. Cl.⁵ : **B29C 67/14,** B29C 67/18,
B62D 35/00

(21) Numéro de dépôt : 89400535.4

(22) Date de dépôt : 27.02.89

(54) **Procédé de fabrication de pièces de carrosserie d'automobile, notamment d'aileron ou becquet arrière, et pièces obtenues par mise en oeuvre de ce procédé.**

(30) Priorité : 03.03.88 FR 8802683

(43) Date de publication de la demande :
13.09.89 Bulletin 89/37

(45) Mention de la délivrance du brevet :
05.08.92 Bulletin 92/32

(84) Etats contractants désignés :
BE DE ES GB IT LU NL SE

(56) Documents cités :
EP-A- 0 278 488
DE-A- 3 408 975
JP-U-61 012 855
US-A- 3 644 168
US-A- 3 971 837
PATENT ABSTRACTS OF JAPAN, vol. 10, no.
122 (M-476)[2174], 7 mai 1986, page 116 M 476;
& JP-A-60 250 924 (TOYOTA JIDOSHAK.K.)
11-12-1985
PATENT ABSTRACTS OF JAPAN, vol. 10, no.
122 (M-476)[2179], 7 mai 1986, page 115 M 476;
& JP-A-60 250 922 (TOYOTA JIDOSHAK.K.)
11-12-1985
PATENT ABSTRACTS OF JAPAN, vol. 9, no.
142 (M-382)[1865], 18 juin 1985, page 146 M
388; & JP-A-60 22 564 (NIPPON DENSOK.K.)
05-02-1985

(56) Documents cités :
PATENT ABSTRACTS OF JAPAN, vol. 10, no.
40 (M-454)[2097], 18 février 1986, page 72 M
454; & JP-A-60 192 609 (TOYOTAJIDOSHA
K.K.) 01-10-1985
PATENT ABSTRACTS OF JAPAN, vol. 6, no.
236 (M-173)[1114], 25 novembre 1982, page 70
M 173; & JP-A-57 135 113 (AIDAENGINEERING
K.K.) 20-08-1982
PLASTIQUES MODERNES ET ELASTOMERES,
vol. 32, no. 8, octobre 1980, pages 97-101,
Paris, FR; M.W. LAND: "Insertion de douilles:poincon ou ultrasons?"

(73) Titulaire : HUTCHINSON
2 rue Balzac
F-75008 Paris (FR)

(72) Inventeur : Chatelin, Jean-Pierre
26, rue des Coudriers
F-86100 Chatellerault (FR)
Inventeur : Thibaud, Bernard
Rue de Touraine Antran
F-86100 Chatellerault (FR)
Inventeur : Nivert, Chantal
Champ de Foire Scorbe-Clairvaux
F-86140 Lencloitre (FR)

(74) Mandataire : Orès, Bernard et al
Cabinet ORES 6, Avenue de Messine
F-75008 Paris (FR)

**Description**

L'invention a pour objet un procédé de fabrication par les techniques RIM de pièces de carroserie d'automobile, notamment de becquet ou d'aileron arrière comportant un insert noyé dans une mousse de polyuréthanne, elle-même enfermée dans une peau externe, ainsi que les pièces obtenues par mise en oeuvre de ce procédé

On sait que l'industrie automobile utilise largement les matières plastiques, en particulier les matières thermoplastiques qui peuvent être mise en oeuvre par les techniques d'injection, d'extrusion ou d'extrusion-soufflage. Dans le domaine de la carrosserie, en particulier, on a déjà proposé la fabrication de pièces en polyuréthanne du type mousse à peau intégrale par les techniques RIM (initiales de l'expression anglaise Reaction Injection Molding), c'est-à-dire moulage par injection réaction. Ces techniques sont généralement mise en oeuvre pour la réalisation de pièces relativement peu épaisses et/ou de faibles dimensions et pour lesquelles l'on n'exige pas de caractéristiques de résistance mécanique importante

Lorsque, par contre, on envisage la fabrication industrielle de pièces de forme relativement longues et comportant au moins en certaines de leurs zones des surépaisseurs, comme des becquets ou ailerons arrière d'automobiles à l'aide de ces techniques, il faut faire appel à un procédé relativement compliqué, ont et onéreux, du type de ceux décrits dans JP-A-60 250 294 ou JP-A-60 250 922 ou JP-U-61-12885. Dans ce dernier document, en particulier, est décrit un becquet constitué d'un noyau en matériau cellulaire de faible densité renforcé par une enveloppe métallique et revêtu d'une couche épaisse de résine mise en forme sur le noyau renforcé par les techniques RIM et destinée à donner à la pièce la forme extérieure et l'aspect recherché. Dans les becquets selon ce document, un renfort métallique dont les dimensions sont sensiblement inférieures à celles du becquet est ainsi disposé au contact de la couche externe, ou très près de celle-ci, ce qui n'est pas exempt d'inconvénients tant en ce qui concerne la solidité des pièces fabriquées que leur aspect.

Etant donné que l'on exige aussi de ces pièces de carrosserie, outre des caractéristiques de résistance mécanique, notamment de résistance à la déflexion sous charge ou encore, et dans un autre ordre d'idée, qu'elles présentent un aspect agréable, d'une part et puissent être aisément mises en peinture, d'autre part, alors on se heurte à des difficultés telles qu'il n'a pas été possible, à ce jour, de les résoudre de manière satisfaisante par la technique connue.

C'est, précisément un but de l'invention de fournir un procédé de fabrication de pièces en matière synthétique, en particulier à base de polyuréthanne, ou de matériau transformable par les techniques RIM qui, plus simple que les procédés connus et surmontant les obstacles existants, permette l'obtention de telles pièces de façon simple et sûre.

C'est, aussi, un but de l'invention de fournir un tel procédé qui permette l'obtention de pièces de carrosserie automobile de meilleure qualité que les pièces connues, notamment en ce qui concerne leurs caractéristiques mécaniques, en particulier de rigidité et/ou d'aspect.

C'est, encore, un but de l'invention de fournir un tel procédé qui permette la réalisation de pièces de forme de structure plus simple que celle des pièces connues avec pour conséquence une diminution importante des pièces défectueuses et des rebuts, accroissant d'autant la productivité et la rentabilité d'un atelier de fabrication industrielle de pièces de carrosserie utilisant le procédé de l'invention.

Ce procédé de fabrication par les techniques RIM de pièces de carrosserie d'automobiles, notamment d'ailerons ou becquets arrières de véhicule comportant un insert enfermant un renfort mécaniquement résistant noyé dans une mousse de polyuréthanne elle-même enfermée dans une peau externe selon la figure 4 de JP-U-61-12885, est caractérisé en ce qu'on réalise d'abord l'insert par surmoulage du renfort dans une mousse de polyuréthanne rigide ou dans un autre matériau susceptible de réagir chimiquement lors d'opérations de moulage par injection, et en ce que l'on effectue ensuite sur ledit insert un surmoulage de polyuréthanne compact ou d'un autre matériau transformable par les techniques RIM pour former la peau externe de ladite pièce.

L'invention prévoit, dans un premier mode d'exécution, de faire application d'un renfort métallique et l'encapsulation dudit renfort est alors effectuée à l'aide d'une mousse de polyuréthanne rigide de relativement basse densité, c'est-à-dire de l'ordre de 0,01 à 0,3, tandis que l'opération de surmoulage de l'insert est conduite pour fournir une peau externe d'épaisseur constante, apportant de la rigidité à l'ensemble, favorable à l'aspect de la pièce fabriquée et facilitant en outre la mise en peinture, comme requis par les constructeurs d'automobiles pour que les ailerons ou becquets soient de même couleur que la caisse du véhicule.

Dans un tel mode d'exécution, la largeur du renfort métallique est de l'ordre de celle de l'insert.

Dans un autre mode d'exécution, le renfort est à base de matériaux composites obtenus à l'aide d'au moins un ruban ou feuille "unidirectionnel" de fibres de verre et/ou de carbone, ainsi que d'un mat de fibres de verre.

Quel que soit le mode d'exécution on obtient par le procédé de l'invention un faible pourcentage de rebuts, les pièces de carrosserie fabriquées se révèlant d'une grande précision géométrique.

Suivant une autre caractéristique, on prévoit qu'au cours du premier surmoulage, c'est-à-dire au cours de l'encapsulation pour former l'insert, des organes de fixation de la pièce de carrosserie sur le véhicule qu'elle est destinée à équiper soient simultanément partiellement surmoulés de façon à être solidaires de l'insert.

Dans une forme de réalisation, lesdites pièces de fixation sont du type à vis et/ou à canons taraudés.

Dans une autre réalisation, on fait application pour le montage des pièces de fixation sur la pièce de carrosserie de broches associées au moule de fabrication de l'insert, d'une part, et au moule de fabrication de la peau, d'autre part.

Selon encore une autre caractéristique, le procédé comporte une étape de réglage de l'épaisseur de la peau de manière qu'elle soit uniforme.

L'invention a également pour objet une pièce de carrosserie d'automobile, notamment un aileron ou becquet arrière de véhicule, obtenu par mise en oeuvre du procédé qui vient d'être défini, comportant un insert ou renfort mécaniquement résistant noyé dans une mousse de polyuréthanne enfermé dans une peau fine intégrale, comme en partie montré par la figure 5 de JP-U-61-12885, caractérisée en ce que la peau entoure complètement la mousse à l'exception des surfaces nécessaires au passage des éléments de fixation, et en ce que la surface extérieure de la peau telle qu'elle résulte du surmoulage par les techniques RIM constitue directement la surface extérieure de la pièce de carrosserie finie ou avant peinture.

D'autres caractéristiques et avantages de l'invention apparaîtront de la description qui suit, faite à titre d'exemple et en référence au dessin annexé dans lequel :

– la figure 1 est une vue très schématique, en perspective, de la partie postérieure d'une automobile montrant un becquet ou aileron arrière ;

– la figure 2 est une vue schématique illustrant une première étape du procédé de fabrication d'un aileron ou becquet à l'aide du procédé selon l'invention ;

– la figure 3 est une vue à plus grande échelle d'une partie d'un insert réalisé au cours de cette première étape de fabrication ;

– la figure 4 est une vue analogue à celle de la figure 2, mais illustrant une seconde étape du procédé selon l'invention ;

– la figure 5 est une vue à plus grande échelle d'une partie d'aileron ou becquet obtenu à l'aide du procédé selon l'invention ;

– la figure 6 illustre la fabrication d'une pièce de carrosserie par le procédé selon l'invention mais pour un autre mode d'exécution.

Un aileron ou becquet arrière 10 d'une automobile 11 dont la longueur est sensiblement celle du capot de coffre ou du hayon est monté sur ce dernier par des pattes 12 dont la hauteur peut être de l'ordre de 70 mm dans le cas d'un becquet, la fixation ayant lieu soit à l'aide d'écrous propres à coopérer avec des vis noyées aux extrémités des pattes, soit avec des vis propres à coopérer avec des canons taraudés logés dans les pattes, soit à l'aide de vis et d'écrous. Les dimensions de ces pièces de carrosserie, tant en ce qui concerne leur longueur que leur plus grande épaisseur, font qu'elles ne peuvent être fabriquées industriellement par injection ou extrusion de matière thermoplastique. Elles ne peuvent pas non plus être obtenues par une seule opération de moulage par injection réaction (RIM) autour d'un insert propre à fournir à la pièce la rigidité requise, notamment celle souhaitée de résistance à la déflexion sous charge.

Pour cependant bénéficier des avantages des techniques RIM, l'invention propose alors de fabriquer le becquet ou aileron arrière 10 en réalisant d'abord un insert pour ledit becquet ou aileron à partir d'un renfort mécaniquement résistant, ou rendu mécaniquement résistant par fabrication et qui est encapsulé par surmoulage dans une mousse de polyuréthanne rigide ou dans un autre matériau transformable par les techniques RIM, ledit insert formant ensuite le noyau d'un surmoulage de polyuréthanne compact ou d'un autre matériau transformable par les techniques RIM pour constituer la peau externe du becquet ou aileron 10.

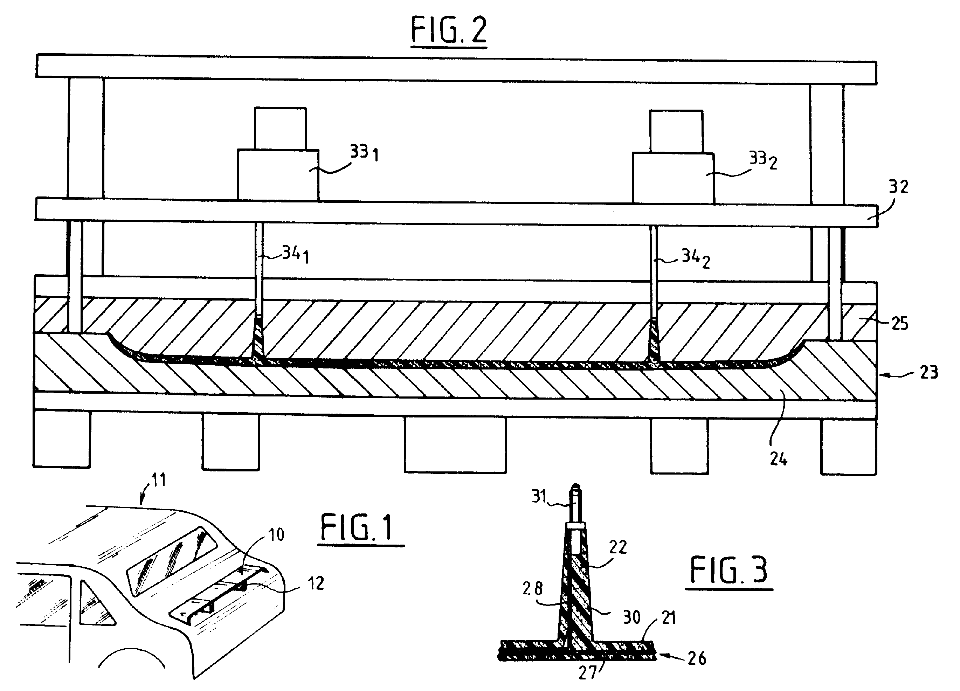

De façon plus précise, un premier mode d'exécution prévoit que l'insert 20, figures 2 et 3, soit constitué par une âme 21 et des pattes 22 et soit réalisé dans un moule 23 à matrice 24 et poinçon 25 à partir d'un renfort 26, avantageusement métallique, constitué par exemple par une tôle ondulée sur laquelle sont soudés des plats métalliques portant les vis de fixation au droit des pattes 22, dans le cas d'un aileron, ou par deux tubes parallèles reliés par des entretoises et des plats coudés à leurs extrémités dans le cas d'un becquet. Dans la réalisation décrite et représentée, l'âme longitudinale du renfort, avantageusement métallique, est montrée en 27 et des raidisseurs règnant au droit des pattes sont montrés en 28.

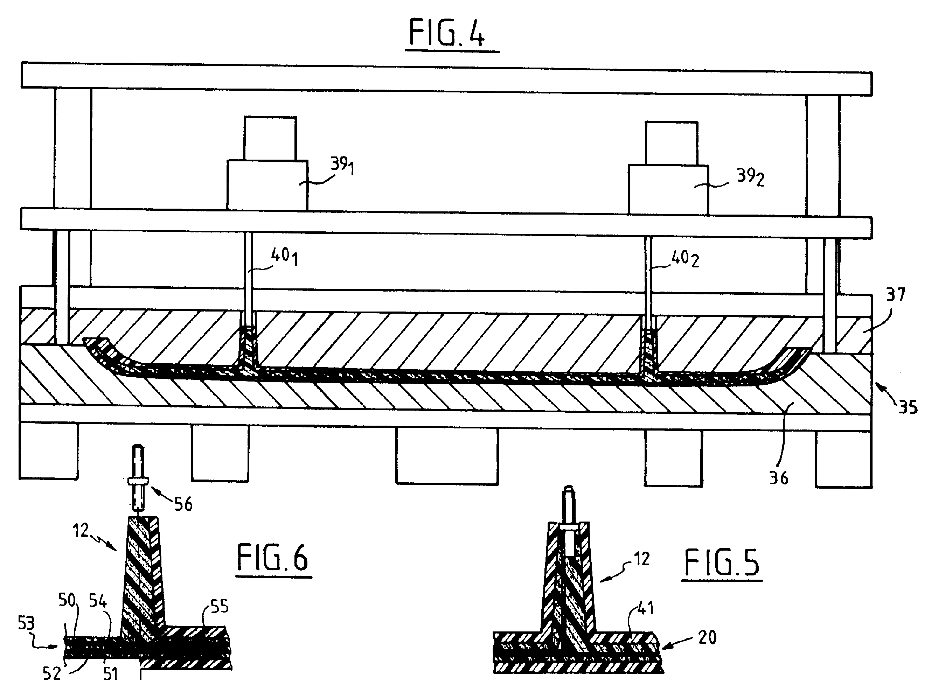

Dans la variante de réalisation, illustrée sur la figure 6, l'insert 53 est à base de matériaux composites obtenus à l'aide de rubans en fibres de verre et/ou de carbone ainsi que de mats en fibres de verre.

Dans le cas d'un renfort métallique 26 celui-ci est encapsulé à l'aide du moule 23 dans une mousse 30 de polyuréthanne rigide basse densité tandis que des vis de fixation 31, figure 3, sont mises en place aux extrémités des pattes 12 de l'insert à l'aide de broches rotatives $34_1$, $34_2$, etc... disposées en correspondance des pattes de l'aileron ou becquet à fabriquer et commandées à partir de moteurs hydrauliques débrayables $33_1$, $33_2$, etc... portés par une plate-forme 32 associée au poinçon 25.

Après réalisation de l'insert 20, celui-ci est transféré dans un second moule 35, figure 4, comportant lui aussi une matrice 36 et un poinçon 37 auquel est associée une table 38 portant des moteurs hydrauliques à débrayage $39_1$ et $39_2$, etc... d'entraînement en

rotation de broches $40_1$, $40_2$, etc... disposées en correspondance des pattes 12 de la pièce de carrosserie à fabriquer. Celle-ci résulte alors de la formation sur l'insert 20, et dans le moule 35, d'une peau 41, figure 5, en polyuréthanne compact d'épaisseur constante, par exemple de l'ordre de 3 à 6 mm, qui accroît la rigidité d'ensemble et, en outre, permet une mise en peinture et un aspect du type de ceux désignés par la mention "Classe A" par les constructeurs d'automobiles, c'est-à-dire un aspect très proche de celui des tôles peintes des caisses de carrosserie.

En variante on remplace le polyuréthanne par un autre matériau transformable par les techniques RIM.

Le procédé selon l'invention permet d'inclure dans les pièces de carrosserie des moyens de fixation à vis 31 ou, en variante, à canons taraudés, non représentés, ou encore à la fois des moyens à vis et à canons dans le cas de becquets arrière d'automobiles.

Dans le cas de vis comme 31 celles-ci sont avantageusement fixées aux extrémités de platines hexagonales, tandis que dans le cas de canons taraudés ceux-ci sont avantageusement rendus solidaires de l'insert par des moyens d'ancrage quelque peu analogues à des chevilles à languettes élastiques déformables.

Nonobstant les phénomènes de retrait qui apparaissent lors de la mise en oeuvre de mousse de polyuréthanne rigide basse densité, le procédé selon l'invention permet de supprimer, lors de la fabrication des ailerons ou becquets, les retassures et autres défauts liés aux procédés connus de moulage en une étape d'une pièce à ses dimensions définitives sur un insert métallique.

Dans un autre mode d'exécution, figure 6, l'insert 53 est réalisé à partir d'un renfort composite comportant une feuille ou ruban 50 de fibres de carbone tissées ou un "carbone unidirectionnel", -c'est-à-dire une feuille constituée par des fibres de carbone sensiblement parallèles réunies entre elles par des filaments dirigés transversalement aux fibres-, et une feuille 52 de "verre unidirectionnel" avec interposition entre les deux dites feuilles d'un mat de fibres de verre 51 avantageusement du type "UNIFILO" (une marque déposée de la Société VETROTEX).

Comme montré sur la partie gauche de la figure 6, l'insert 53 est réalisé en surmoulant d'abord sur le composite une mousse 54 de polyuréthanne rigide ou un autre matériau transformable par les techniques RIM, puis l'insert 53 est transféré dans un moule, comme le moule 35, pour former sur ledit insert, (partie droite de la figure 6), une peau 55 d'épaisseur constante par exemple à base de polyuréthanne ou en un autre matériau transformable par les techniques RIM par exemple du polyamide, polyurée ou polyester.

Dans une telle réalisation, les pattes 12 sont démunies de renforts et les vis comme 56 ou les canons taraudés, non représentés, sont mis en place dans les pattes après moulage.

Dans encore un autre mode d'exécution, l'insert 53 est fabriqué à partir d'un mat de fibres de verre, du même type que celui utilisé dans le mode d'exécution décrit immédiatement ci-dessus, placé dans un moule comme le moule 23 dans lequel on injecte alors le polyuréthanne ou un autre matériau transformable par les techniques RIM, par exemple du polyacrylamate, polyester ou époxy.

Après injection, l'insert obtenu est muni d'une feuille ou ruban unidirectionnel, avantageusement à base de fibres de carbone, fixé de préférence par collage et l'ensemble est alors mis en place dans un moule comme le moule 35 pour la fabrication de la pièce de carrosserie souhaitée.

## Revendications

1. Procédé de fabrication par les techniques RIM de pièces de carrosserie d'automobile, notamment d'ailerons ou becquets arrière de véhicule comportant un insert enfermant un renfort (26) mécaniquement résistant noyé dans une mousse de polyuréthanne elle-même enfermée dans une peau externe, caractérisé en ce qu'on réalise d'abord l'insert (20, 53) par surmoulage du renfort (26) dans une mousse de polyuréthanne rigide (30, 54) ou dans un autre matériau susceptible de réagir chimiquement lors d'opérations de moulage par injection, et en ce que l'on effectue ensuite sur ledit insert un surmoulage de polyuréthanne compact ou d'un autre matériau transformable par les techniques RIM pour former la peau externe (41, 55) de ladite pièce (10).

2. Procédé selon la revendication 1, caractérisé en ce que le surmoulage du renfort (26) est effectué à l'aide d'une mousse de polyuréthanne rigide de relativement basse densité, c'est-à-dire de l'ordre de 0,01 à 0,3.

3. Procédé selon la revendication 1 ou la revendication 2, caractérisé en ce que le renfort (26) est un renfort métallique de largeur de l'ordre de celle de l'insert.

4. Procédé selon la revendication 1 ou la revendication 2, caractérisé en ce que le renfort (53) est à base de matériaux composites obtenus à l'aide d'au moins un ruban ou feuille "unidirectionnel" (50, 52) de fibres de verre et/ou de carbone ainsi que d'un mat de fibres de verre (51).

5. Procédé selon l'une quelconque des revendications précédentes, caractérisé en ce qu'au cours du premier surmoulage, c'est-à-dire au cours de l'encapsulation pour former l'insert, des organes de fixation (31) de la pièce de carrosserie (10) sur le véhicule qu'elle est destinée à équiper sont simultanément partiellement surmoulés de façon à être solidaire de l'insert.

6. Procédé selon la revendication 5, caractérisé en ce que lesdites pièces de fixation sont du type à vis (31, 56) et/ou à canons taraudés.

7. Procédé selon la revendication 5, caractérisé en ce qu'on fait application pour le montage des pièces de fixation sur la pièce de carrosserie, de broches (34, 40) associées au moule (23) de fabrication de l'insert (20), d'une part et au moule (35) de fabrication de la peau (41), d'autre part.

8. Procédé selon l'une quelconque des Revendications précédentes, caractérisé en ce qu'il comporte une étape de réglage de l'épaisseur de la peau (41, 55) pour que celle-ci soit uniforme.

9. Pièce de carrosserie d'automobile, notamment aileron ou becquet arrière de véhicule, obtenue par mise en oeuvre du procédé selon l'une quelconque des revendications précédentes comportant un insert ou renfort mécaniquement résistant noyé dans une mousse de polyuréthanne enfermée dans une peau fine intégrale, caractérisée en ce que la peau entoure complètement la mousse à l'exception des surfaces nécessaires au passage des éléments de fixation, et en ce que la surface extérieure de la peau telle qu'elle résulte du surmoulage par les techniques RIM constitue directement la surface extérieure de la pièce de carrosserie finie ou avant peinture.

10. Pièce de carrosserie selon la revendication 9, caractérisée en ce que l'épaisseur de la peau est constante.

11. Pièce de carrosserie selon la revendication 9, ou la revendication 10, caractérisée en ce que le renfort est à base de matériaux composites obtenus à l'aide d'au moins un ruban ou feuille "unidirectionnel" de fibres de verre ou de carbone.

**Patentansprüche**

1. Verfahren zur Herstellung von Kraftfahrzeugkarosserieteilen, insbesondere Heckflossen oder - spoilern des Fahrzeugs, durch Reaktionsspritzgußtechniken, die einen Einsatz haben, der eine mechanisch widerstandsfähige Verstärkung (26) enthält, die in einem Polyurethanschaum versenkt ist, welcher seinerseits in einer äußeren Haut eingeschlossen ist, dadurch gekennzeichnet, daß man zunächst den Einsatz (20, 53) durch Einformung der Verstärkung (26) in einen steifen Polyurethanschaum (30, 54) oder in ein anderes Material, das fähig ist, während der Vorgänge des Spritzgießens chemisch zu reagieren, realisiert, und daß man danach um diesen Einsatz eine Umformung von kompaktem Polyurethan oder von einem anderen Material, das durch die Reaktionsspritzgußtechniken transformierbar ist, bewirkt, um die äußere Haut (41, 55) dieses Teils (10) auszubilden.

2. Verfahren nach Anspruch 1, dadurch gekennzeichnet, daß die Einformung der Verstärkung (26) mit Hilfe eines steifen Polyurethanschaums von relativ niedriger Dichte, d.h. in der Größenordnung von 0,01 bis 0,3, bewirkt wird.

3. Verfahren nach Anspruch 1 oder 2, dadurch gekennzeichnet, daß die Verstärkung (26) eine metallische Verstärkung einer Weite von der Größenordnung derjenigen des Einsatzes ist.

4. Verfahren nach Anspruch 1 oder 2, dadurch gekennzeichnet, daß die Verstärkung (53) eine solche auf der Basis von Verbundmaterialien ist, die mit Hilfe von wenigstens einem "einseitig gerichteten" Streifen oder einer "einseitig gerichteten" Folie (50, 52) von Glas- und/oder Kohlenstoffasern sowie von einer Matte von Glasfasern (51) erhalten werden.

5. Verfahren nach irgendeinem der vorhergehenden Ansprüche, dadurch gekennzeichnet, daß im Verlauf der ersten Einformung, d.h. im Verlauf der Einkapselung zum Ausbilden des Einsatzes, Befestigungsorgane (31) des Karosserieteils (10) auf dem Fahrzeug, das es auszurüsten bestimmt ist, gleichzeitig teilweise in der Art eingeformt werden, daß sie fest mit dem Einsatz verbunden sind.

6. Verfahren nach Anspruch 5, dadurch gekennzeichnet, daß die erwähnten Teile für die Befestigung vom Schraubentyp (31, 56) und/oder vom mit Innengewinde versehenen Hülsentyp sind.

7. Verfahren nach Anspruch 5, dadurch gekennzeichnet, daß man für die Montage der Teile für die Befestigung auf dem Karosserieteil Zapfen (34, 40), die mit der Form (23) für die Herstellung des Einsatzes (20) einerseits und der Form (35) für die Herstellung der Haut (41) andererseits verbunden sind, verwendet.

8. Verfahren nach irgendeinem der vorhergehenden Ansprüche, dadurch gekennzeichnet, daß es einen Schritt der Einstellung der Dicke der Haut (41, 55), damit diese gleichförmig wird, umfaßt.

9. Kraftfahrzeugkarosserieteil, insbesondere Heckflosse oder -spoiler des Fahrzeugs, erhalten durch Durchführung des Verfahrens nach irgendeinem der vorhergehenden Ansprüche, umfassend einen Einsatz oder eine Verstärkung, der bzw. die mechanisch widerstandsfähig ist, versenkt in einem Polyurethanschaum, der in einer feinen integralen Haut eingeschlossen ist, dadurch gekennzeichnet, daß die Haut den Schaum mit der Ausnahme von Oberflächen, welche zum Durchgang von Befestigungselementen notwendig sind, vollständig umgibt, und daß die äußere Oberfläche der Haut, wie sie aus der Umformung durch die Reaktionsspritzgußtechniken resultiert, direkt die äußere Oberfläche des Karosserieteils, das fertig oder vor dem Farbauftrag ist, bildet.

10. Karosserieteil nach Anspruch 9, dadurch gekennzeichnet, daß die Dicke der Haut konstant ist.

11. Karosserieteil nach Anspruch 9 oder 10, dadurch gekennzeichnet, daß die Verstärkung eine solche auf der Basis von Verbundmaterialien ist, die mit Hilfe von wenigstens einem "einseitig gerichteten" Streifen oder einer "einseitig gerichteten" Folie von Glas- oder Kohlenstoffasern erhalten worden sind.

## Claims

1. A method of using RIM techniques to manufacture car bodywork parts, in particular rear fins or spoilers, comprising an insert enclosing a mechanically strong reinforcement member (26) embedded in a polyurethane foam, the foam itself enclosed in an outer skin, characterized in that initially the insert (20, 53) is made by encapsulating the reinforcement member (26) by overmoulding in a rigid polyurethane foam (30, 54) or in some other material which is able to react chemically during the injection moulding operations, and in that compact polyurethane or some other material transformable by RIM techniques is then overmoulded on said insert in order to form the outer skin (41, 55) of said part (10).

2. Method according to Claim 1, characterized in that the reinforcement member (26) is encapsulated by means of a rigid polyurethane foam of relatively low density, i.e. about 0,01 to 0,3.

3. Method according to Claim 1 or Claim 2, characterized in that the reinforcement member (26) is a metallic reinforcement member with a width approximately equal to that of the insert.

4. Method according to Claim 1 or Claim 2, characterized in that the reinforcement member (53) is based on composite materials obtained by means of at least one unidirectional tape or sheet (50, 52) of glass and/or carbon fibres, together with a mat of glass fibres (51).

5. Method according to any preceding claim, characterized in that, simultaneously with the first overmoulding, that is to say during encapsulation to form the insert, fixing members (31) for attaching the bodywork part (10) to the vehicle for which it is intended, are simultaneously partially overmoulded in order to be integral with the insert.

6. Method according to Claim 5, characterized in that said fixing parts are of the type having screws (31, 56) and/or tapped bushes.

7. Method according to Claim 5, characterized in that, in order to mount the fixing parts on the bodywork part, use is made of pegs (34, 40) associated with both the mould (23) used for manufacturing the insert (20) and with the mould (35) used for manufacturing the skin (41).

8. Method according to any preceding claim, characterized in that it includes a step for adjusting the thickness of the skin (41, 55) to ensure that it is uniform.

9. A car bodywork part, in particular a rear fin or spoiler, obtained by implementing the method of any preceding claim, comprising an insert or mechanically strong reinforcement member embedded in a polyurethane foam enclosed in an unbroken fine skin, characterized in that the skin completely surrounds the foam with the exception of the areas necessary for the passage of the fixing members, and in that the outer surface of the skin as obtained by overmoulding using RIM techniques directly represents the outer surface of the bodywork part, finished or before painting.

10. A car bodywork part according to Claim 9, characterized in that the thickness of the skin is constant.

11. A car bodywork part according to Claim 9, or to Claim 10, characterized in that the reinforcement member is based on composite materials obtained by means of at least one uni-directional tape or sheet of glass or carbon fibres.

FIG. 2

$33_1$

$33_2$

32

$34_1$

$34_2$

25

23

24

7

EP 0 332 495 B1

11

10

FIG.1

12

31

22

28

30   21

FIG.3

26

27

## FIG.4

$39_1$

$39_2$

$40_1$

$40_2$

37

35

36

8

EP 0 332 495 B1

## FIG.6

56

12

50 54 55

53

52 51

## FIG.5

12

41

20